# EUROPEAN PATENT SPECIFICATION

(11) **EP 1 928 756 B1**
(45) Date of publication and mention of the grant of the patent: **14.04.2010**
(21) Application number: 06744345.7
(22) Date of filing: 08.06.2006
(51) Int. Cl.: B65D 39/00, B65D 65/46, C08L 67/04, C08J 9/06, B29C 44/34

(54) **Polymer cork, composition and method**
Polymerkorken, Zusammensetzung und Verfahren zu seiner Herstellung
Bouchon en polymère, composition et procédé pour sa fabrication

(30) Priority: 08.06.2005 GB 0511620; 09.06.2005 GB 0511726
(43) Date of publication of application: 11.06.2008
(73) Proprietor: BIOTEC Biologische Naturverpackungen GmbH & Co. KG, 46446 Emmerich (DE)
(72) Inventor: SCHMIDT, Harald Peter, 46446 Emmerich (DE)
(74) Representative: Cohausz & Florack
(86) International application number: PCT/GB2006/050144
(87) International publication number: WO 2006/131767

(56) References cited:
- EP-A- 1 205 396
- WO-A-01/02263
- WO-A-99/06293
- WO-A-03/053651
- WO-A-2005/035656
- DE-A1- 10 012 394

## Description

This invention relates to a biodegradable polymer cork, and to a method of forming such a polymer cork.

Natural cork has been used for making corks for wine bottles for centuries. However there are limited supplies of this material. Polymeric corks have also been made in recent years, but are not biodegradable. Another problem with such artificial corks is to achieve a sufficiently resilient material.

DE 100 12 394 A1 describes a process for the manufacture of a cork-like closure for bottle-like containers using a physical raising agent. WO 2005/035656 A & EP 1 679 347 A1 describe a resin composition comprising 10 to 99 mass% of a biodegradable aliphatic polyester resin (X), and 90 to 1 mass% of a polyolefin resin (Y). WO 03/053651 A1 describes a process for the production of granules of expandable thermoplastic polymers by means of extrusion, which comprises: i) melting the polymer in a single- or multi-screw extruder (2); ii) incorporating an expanding agent in the polymer in the molten state; iii) granulating the polymer thus obtained in a device comprising a die (111), containing a series of ducts (115) made of a material having a high thermal conductivity (114), a cutting chamber (118) containing a set of hydraulic nozzles and a cutting system equipped with a set of knives (215) with a cutting edge which is radial with respect to the surface of the die; iv) annealing the granules thus obtained; v) cooling the annealed granules to room temperature.

In a first aspect, the present invention provides a composition for making a biodegradable polymer cork, the composition primarily comprising biodegradable polyester, and also comprising polyisobutylene and a raising agent.

In a second aspect, the present invention provides a method for making a biodegradable polymer cork comprising mixing a biodegradable polyester with smaller amounts of polyisobutylene and of a raising agent, and forming this mixture into the desired product using a mould.

According to a third aspect of the present invention there is provided a synthetic biodegradable polymer cork.

This method may be carried out in two stages, the components first being thoroughly mixed, for example using a twin screw extruder, to form pellets, and the pellets subsequently being subjected to a moulding process such as an injection moulding process to form the polymer corks.
In the preferred embodiment the biodegradable polyester forms between 80 and 90% of the composition (by weight), while the polyisobutylene is in the range 10 to 20%, and the raising agent is about 2%. If this composition is to be made into corks in two successive stages as described above, the extrusion step to form pellets should be carried out at a temperature below that at which the raising agent is activated, whereas the injection moulding process should be carried out above that temperature. The polyisobutylene provides resilience and elasticity to the resulting corks, so that they are not difficult to insert into the bottle, and then, when released, grip on the wall firmly.

The invention will now be further and more particularly described, by way of example only, and with reference to the following examples.

In the present invention polymeric corks are made by first combining the following ingredients:

### Example 1

| | |
|---|---|
| Biodegradable polyester (Ecoflex (TM) from BASF) | 84% |
| Polyisobutylene gum base | 14% |
| Raising agent | 2% |

These ingredients are mixed together and then fed into the hopper of a twin screw extruder operating at a maximum temperature of 140°C. This produces strands which are cooled using a water bath, and then cut into pellets. Subsequently the pellets are introduced into an injection moulding apparatus in which the composition is heated to about 200°C and subjected to injection moulding to form corks. The raising agent comes into effect, generating carbon dioxide, at about 180°C, so that the resulting corks have a foam-like interior structure, and have a continuous polymeric layer on the outer surface.

The resulting corks are more resilient than natural cork, and considerably more resilient than typical plastic corks. They are therefore much easier to insert into the bottle, and they provide a reliable gas-tight seal as soon as they are inserted.

### Example 2

| | |
|---|---|
| Biodegradable polyester (Ecoflex (TM) from BASF) | 80% |
| Polyisobutylene gum base | 18% |
| Raising agent | 2% |

These ingredients are introduced directly into the hopper of a twin screw extruder, and are mixed and extruded together to form pellets, in much the same way as described above. The pellets are then subjected to injection moulding to form the corks. The higher proportion of polyisobutylene in this Example provides corks that are of still greater resilience and elasticity.

The polyisobutylene gum may be a product such as Vistanex produced by Exxonmobil.

The raising agent may be a chemical blowing agent such as Corducell, for example Corducell ET 9918 or Corducell 9520, produced by Nemitz Kunststoff-Additive GmbH. Corducell decomposes on heating producing ammonia free gas.

Biodegradation of the corks occurs only in the presence of both water and soil microorganisms, so that there is no risk of degradation occurring during normal use of the corks.

## Claims

1. A composition for making a biodegradable polymer cork, the composition primarily comprising biodegradable polyester, and also comprising polyisobutylene and a raising agent.

2. A method for making a biodegradable polymer cork comprising mixing a biodegradable polyester with smaller amounts of polyisobutylene and of a raising agent, and forming this mixture into the desired product using a mould.

3. A method as claimed in claim 2 wherein the components are first thoroughly mixed, and subsequently subjected to a moulding process to form the polymer corks.

4. A method as claimed in claim 3 wherein the components are mixed to form pellets using a twin screw extruder, and wherein the moulding process utilises injection moulding.

5. A method as claimed in any one of claims 2 to 4 wherein the biodegradable polyester forms between 80 and 90% of the composition (by weight), while the polyisobutylene is in the range 10 to 20%, and the raising agent is about 2%.

6. A biodegradable polymer cork made by a method as claimed in any one of claims 2 to 5.

## Patentansprüche

1. Zusammensetzung für die Herstellung eines biologisch abbaubaren Polymerkorkens, die hauptsächlich einen biologisch abbaubaren Polyester und auch Polyisobutylen und ein Blähmittel enthält.

2. Verfahren zur Herstellung eines biologisch abbaubaren Polymerkorkens, welches das Vermischen eines biologisch abbaubaren Polyesters mit kleineren Mengen an Polyisobutylen und einem Blähmittel und das Formen dieses Gemischs zu dem gewünschten Erzeugnis, wobei ein Werkzeug verwendet wird, enthält.

3. Verfahren nach Anspruch 2, wobei die Komponenten zunächst gründlich miteinander vermischt und anschließend einem Formgebungsvorgang, um die Polymerkorken auszubilden, unterworfen werden.

4. Verfahren nach Anspruch 3, wobei die Komponenten unter Verwendung eines Doppelschneckenextruders miteinander vermischt werden, um Pellets zu bilden, und in dem Formgebungsvorgang das Spritzgießen angewendet wird.

5. Verfahren nach einem der Ansprüche 2 bis 4, wobei der biologisch abbaubare Polyester zwischen 80 und 90 Gew.-% und das Blähmittel etwa 2 Gew.-% der Zusammensetzung ausmachen und das Polyisobutylen sich im Bereich von 10 bis 20 Gew.-% befindet.

6. Biologisch abbaubarer Polymerkorken, der durch das Verfahren nach einem der Ansprüche 2 bis 5 hergestellt worden ist.

## Revendications

1. Composition pour fabriquer un bouchon en polymère biodégradable, la composition comprenant principalement un polyester biodégradable, et comprenant également du polyisobutylène et un agent levant.

2. Procédé de fabrication d'un bouchon en polymère biodégradable comprenant les étapes consistant à mélanger un polyester biodégradable à de moindres quantités de polyisobutylène et d'un agent levant, et à façonner ce mélange en le produit souhaité en utilisant un moule.

3. Procédé selon la revendication 2, dans lequel les composants sont d'abord mélangés intimement, et sont ensuite soumis à un processus de moulage pour former les bouchons en polymère.

4. Procédé selon la revendication 3, dans lequel les composants sont mélangés pour former des granulés en utilisant une extrudeuse à double vis, et dans lequel le processus de moulage utilise un moulage par injection.

5. Procédé selon l'une quelconque des revendications 2 à 4, dans lequel le polyester biodégradable constitue entre 80 et 90% de la composition (en poids), tandis que le polyisobutylène se situe dans l'intervalle de 10 à 20%, et que l'agent levant fait environ 2%.

6. Bouchon en polymère biodégradable fabriqué par un procédé selon l'une quelconque des revendications 2 à 5.
